Europäisches Patentamt

European Patent Office (11) Publication number: **0 047 075**

Office européen des brevets **B1**

(19)

## EUROPEAN PATENT SPECIFICATION

(12)

(45) Date of publication of patent specification: **21.11.85**

(51) Int. Cl.⁴: **F 16 L 3/10, F 16 L 3/12, H 02 G 3/26, F 16 B 2/08**

(21) Application number: **81303647.2**

(22) Date of filing: **11.08.81**

(54) **Securing device for cables, pipes, or other elongate members.**

(30) Priority: **13.08.80 GB 8026429**
**12.01.81 GB 8100829**
**19.02.81 GB 8105271**

(43) Date of publication of application:
**10.03.82 Bulletin 82/10**

(45) Publication of the grant of the patent:
**21.11.85 Bulletin 85/47**

(84) Designated Contracting States:
**AT BE CH DE FR IT LI LU NL SE**

(56) References cited:
**FR-A-2 271 431**
**GB-A-1 235 356**

(73) Proprietor: **BICC Public Limited Company**
**21, Bloomsbury Street**
**London, WC1B 3QN (GB)**

(72) Inventor: **Lyon, Robert Cyril**
**25 St Clements Road**
**Wigan Greater Manchester (GB)**
Inventor: **Fearns, Peter**
**7 Belfield Crescent**
**Huyton Merseyside (GB)**

(74) Representative: **Denton, Michael John et al**
**BICC plc Patents and Licensing Department 38**
**Ariel Way Wood Lane**
**London W12 7DX (GB)**

Courier Press, Leamington Spa, England.

## Description

This invention relates to a device for securing at least one cable, pipe or other elongate member to a support and/or for securing together two or more cables, pipes or other elongate members, for convenience, hereinafter being included in the term "cable".

In installing single-core electric power cables in cable networks of industrial plant, it is the general practice to arrange three single-core power cables alongside one another with their axes passing through the apices of a triangle, such an arrangement usually being referred to as a trefoil cable group. A trefoil cable group is usually secured to a cable ladder by means of cleats and, at spaced positions between the cleats, the cables of the group are secured together by cable straps or ties. These arrangements have the disadvantage that for different sizes of cables different sizes of cable straps and cleats have to be used.

GB—A—1500628 describes a cable securing device in which a strap is wrapped around the cables to secure them together, one end of the strap being fixed to a plate having a rotatable split rod, and the free end of the strap being held in the slit in the rod. When the rod is rotated the strap is tensioned around the cables to secure them together. This arrangement has the disadvantage that the locking means, which prevents the rod rotating to loosen the strap and comprise a ratchet wheel and pawl mechanism, is complicated to construct, susceptible to failure if not properly aligned, and difficult to release. Similar problems occur with locking means described in GB—A—1235356. Further, in both these known arrangements, a separate tool (e.g. a screwdriver) has to be used to tension the strap, and release it.

It is an object of the present invention to provide a device for securing at least one cable to a support and/or for securing together two or more cables which is capable of accommodating a greater range of cable sizes, which remains secured when in use, and is easy to tension, secure and release.

According to the present invention the device comprises a strap which can pass around the cable or cables to be secured at least once, and tensioning means for tensioning the strap around the cable or cables, the tensioning means comprising a plate having upstanding walls at each end between which the strap can pass; a rod in the form of a split pin being rotatably securable in aligned apertures in the upstanding walls of the plate; and locking means for preventing rotation of the split pin when positioned in the apertures, the arrangement being such that in use one end of the strap is fastened to the plate (for example by welding), and, after the strap has passed one or more times around the cable or cables to be secured and the split pin has been positioned in the apertures in the upstanding walls of the plate, the free end of the strap is passed through the slit in the rotatable split pin, the split pin is rotated to tension the strap around the cable or cables, and the locking means is then used to prevent further rotation (either tightening or loosening the strap) of the split pin, the locking means comprising an elongate key which pivotally engages in the eye of the split pin at one end of the key and which can be used to assist in rotating the split pin, and the upstanding walls of the plate have aligned slots, the arrangement being such that after rotation of the split pin the key can be turned over to engage in the aligned slots to prevent further rotation of the split pin, the longitudinal axis of the key being substantially parallel to the longitudinal axis of the split pin.

The plate is preferably made of stainless steel.

When the device is used for securing two or more cables it is preferable that the strap is passed around the cables at least twice in order to prevent the strap cutting into one or more of the cables due to any outward lateral movement of one of the cables (for example, as occurs when an electric cable is subjected to a high level short circuit current).

The strap is preferably made of stainless steel.

This invention can either be used on its own for securing together two or more cables, or can be used in conjunction with a base member and bar arrangement (as described and claimed in our G.B. Patent Application published under the No. 2082242A) for securing one or more cables to a support, or can be used in conjunction with a bar defined by, for example, a rung of a cable ladder, or the central position of a U-bolt, for securing a cable or cables to the bar.

Reference is drawn to our published European Patent Application No. 48086 which describes and claims a securing device comprising a base member, a bar, a strap and tensioning means.

The invention is further illustrated, by way of example, with reference to the accompanying drawings in which:—

Figure 1 is a perspective view of a securing device in accordance with the invention;

Figures 2 and 3 are side and top views respectively of the strap and plate shown in Figure 1;

Figure 4 is a view of the key and split pin used with the plate and strap shown in Figures 2 and 3; and

Figure 5 is a developed view of the plate shown in Figures 2 and 3.

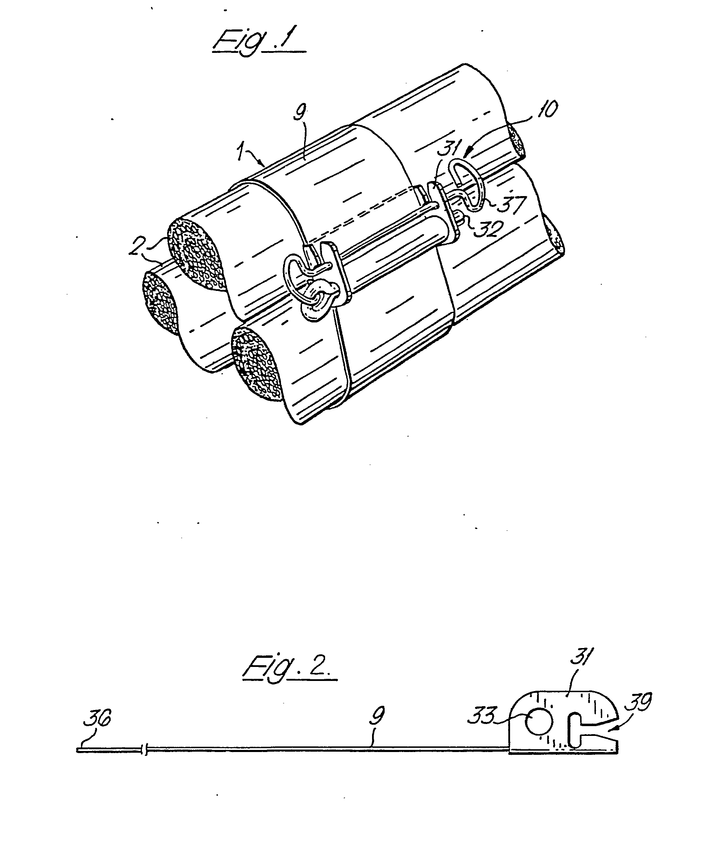

Referring to Figure 1, the device 1 for securing three cables 2 together, comprises a stainless steel strap 9 which passes around the cables and which is tensioned by tensioning means 10.

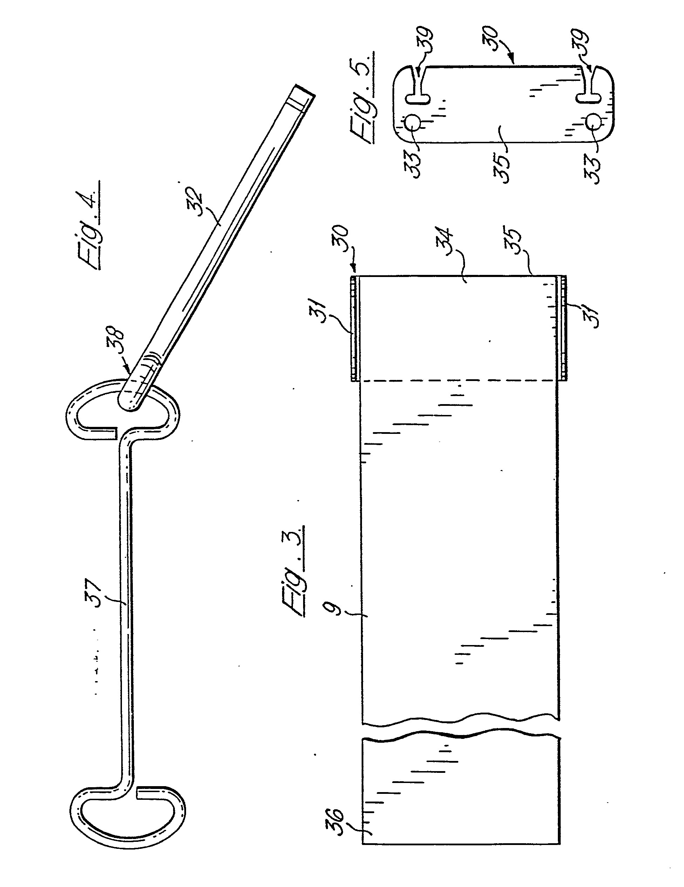

The tensioning means 10 (see Figures 2 to 5) comprises a stainless steel plate 30 having upstanding walls 31 at each end between which the strap 9 passes. A rod, in the form of a stainless steel split pin 32, is rotatably secured in aligned apertures 33 in the upstanding walls 31 of the plate 30. In this arrangement one end 34 of the strap 9 is welded to the central portion 35 of the plate 30. The free end 36 of the strap 9 is passed around the cables 2 to be secured together and then passed through the slit in the split pin 32.

Rotating the split pin 32 winds the strap 9 around the split pin and thereby tensions the strap around the cables 2. Locking means is provided by a key 37 which engages in the eye 38 of the split pin 32 and can be used to assist in rotating the split pin, and which can lock the split pin by being turned over to engage in aligned slots 39 in the upstanding walls 31 of the plate 30.

Although this invention is only illustrated above as securing together a plurality of cables it will be appreciated that the strap may also be passed around a support member defined by a rung of a cable ladder, etc., to secure the cable or cables to the bar.

## Claims

1. A device (1) for securing at least one cable (2) to a support and/or for securing together two or more cables, comprising a strap (9) which can pass around the cable or cables to be secured at least once, and tensioning means (10) for tensioning the strap around the cable or cables, the tensioning means comprising a plate having upstanding walls (31) at each end between which the strap (9) can pass; a rod (32) in the form of a split pin being rotatably securable in aligned apertures (33) in the upstanding walls (31) of the plate; and locking means (37) for preventing rotation of the split pin (32) when positioned in the apertures (33), the arrangement being such that in use one end of the strap (9) is fastened to the plate and, after the strap has passed one or more times around the cable or cables (2) to be secured and the split pin (32) has been positioned in the apertures (33) in the upstanding walls (31) of the plate, the free end of the strap is passed through the slit in the rotatable split pin (32), the split pin is rotated to tension the strap (9) around the cable or cables, and the locking means (37) is then used to prevent further rotation (either tightening or loosening the strap) of the split pin (32), characterised in that the locking means (37) comprising an elongate key which pivotally engages in the eye (38) of the split pin (32) at one end of the key and which can be used to assist in rotating the split pin, and the upstanding walls (31) of the plate have aligned slots (39), the arrangement being such that after rotation of the split pin (32) the key (37) can be turned over to engage in the aligned slots (39) to prevent further rotation of the split pin, the longitudinal axis of the key being substantially parallel to the longitudinal axis of the split pin.

2. A device as claimed in Claim 1, characterised in that the strap (9) is wrapped around a support member to secure the cable or cables to the support member.

## Revendications

1. Dispositif (1) pour fixer au moins un câble (2) à un support et/ou pour fixer ensemble au moins deux câbles, comportant: une sangle (9) capable de passer au moins une fois autour du ou des câbles à fixer, et des moyens tendeurs (10) pour tendre la sangle autour du ou des cables, les moyens tendeurs comportant une plaque ayant, à ses extrémité, des parois relevées (31), la sangle (9) pouvant passer entre ces parois; une tige (32) sous la forme d'une goupille fendue pouvant être fixée avec possibilité de rotation dans des ouvertures alignées (33) aménagées dans les parois relevées (31) de la plaque; et des moyens de verrouillage (37) pour empêcher la rotation de la goupille fendue (32) lorsque celle-ci est placée dans les ouvertures (33), l'agencement étant du type dans lequel, lors de l'utilisation, une extrémité de la sangle (9) est solidarisée à la plaque et, après que la sangle a été passée au moins une fois autour du ou des câbles (2) à fixer et que la goupille fendue (32) a été mise en place dans les ouvertures (33) des parois relevées (31) de la plaque, on fait passer l'extrémité libre de la courroie au travers de la fente dans la goupille fendue tournante (32), on fait tourner cette dernière pour tendre la sangle (9) autour du ou des câbles, et l'on utilise ensuite les moyens de verrouillage (37) pour empêcher toute autre rotation (serrant ou desserrant la sangle) de la goupille fendue (32), caractérisé en ce que les moyens de verrouillage (37) comprennent une clé allongée qui, à l'une des ses extrémités, s'engage, avec possibilité de pivotement, dans l'oeil (38) de la goupille fendue (32) et peut être utilisée pour aider à faire tourner cette goupille fendue, en ce que les parois relevées (31) de la plaque ont des fentes alignées (39), l'agencement étant tel qu'après rotation de la goupille fendue (32) la clé (37) puisse être rabattue pour engagée dans les fentes alignées (39) afin d'empêcher toute autre rotation de la goupille fendue, l'axe longitudinal de la clé étant sensiblement parallèle à l'axe longitudinal de la goupille fendue.

2. Dispositif selon la revendication 1, caractérisé en ce que la sangle (9) est passée autour d'un organe-support pour fixer le ou les câbles à cet organe-support.

## Patentansprüche

1. Vorrichtung (1) zum Befestigen mindestens eines Kabels (2) an einem Träger und/oder zum Befestigen von mindestens zwei Kabeln aneinander, mit einem mindestens einmal um das oder die zu befestigenden Kabel zu führenden Riemen (9) und einer Spannvorrichtung (10) zum Spannen des Riemens um das oder die Kabel, wobei die Spannvorrichtung eine Platte mit hochstehenden Wänden (31) an jedem Ende aufweist, zwischen denen der Riemen (9) geführt ist; einer Stange (32) in Form eines Splints, der drehbar in ausgerichteten Öffnungen (33) in den hochstehenden Wänden (31) der Platte befestigbar ist; und einer Verriegelungsvorrichtung (37) zum Verhindern einer Drehung des Splints (32) nach dessen Positionierung in den Öffnungen (33), wobei die Vorrichtung derart ausgebildet ist, daß beim Gebrauch ein Ende des Riemens (9) an der Platte befestigt ist und das freie Ende des Riemens durch den Schlitz im drehbaren Splint (32) geführt wird, nach dem der Riemen mindestens einmal um das oder die zu befestigenden Kabel (2) geführt und der Splint (32) in den Öffnungen (33) in den hochstehenden Wänden (31) der Platte positioniert wurde, daß der Splint zum Spannen des Riemens (9) um das oder die Kabel gedreht wird und die Verriegelungsvorrichrung (37) danach dazu verwendet wird, eine weitere Drehung des Splints (32) (entweder zum Straffen oder Lösen des Riemens) zu verhindern, dadurch gekennzeichnet, daß die Verriegelungsvorrichtung (37) einen länglichen Schlüssel aufweist, der an einem seiner Enden drehbar in die Öse (38) des Splints (32) eingreift und zum Unterstützen des Drehens des Splints verwendbar ist, und daß die hochstehenden Wände (31) der Platte ausgerichtete Kerben (39) aufweisen, wobei die Vorrichtung derart ausgebildet ist, daß nach dem Drehen des Splints (32) der Schlüssel (37) umgedreht werden kann, und in die ausgerichteten Kerben (39) eingreift, um eine weitere Drehung des Splints zu verhindern, wobei die Längsachse des Schlüssels im wesentlichen parallel zur Längsachse des Splints ist.

2. Vorrichtung nach Anspruch 1, dadurch gekennzeichnet, daß der Riemen (9) um einen Träger gewickelt wird, um das oder die Kabel am Träger zu befestigen.

*Fig.1*

*Fig.2.*

1

*Fig. 4.*

37

38

32

*Fig. 3.*

36    9    31    30

34

35

31

*Fig. 5.*

33    39

35    30

33    39